# EUROPÄISCHE PATENTSCHRIFT

(11) **EP 1 783 288 B1**
(45) Veröffentlichungstag und Bekanntmachung des Hinweises auf die Patenterteilung: **07.09.2011**
(21) Anmeldenummer: 06022669.3
(22) Anmeldetag: 31.10.2006
(51) Int. Cl.: E04B 1/14, E04B 1/90, B32B 5/18

(54) **Baukonstruktion**
Building construction
Structure de construction

(30) Priorität: 02.11.2005 DE 102005052546
(43) Veröffentlichungstag der Anmeldung: 09.05.2007
(73) Patentinhaber: IsoBouw Dämmtechnik GmbH, D-74232 Abstatt (DE)
(72) Erfinder: Traub, Eugen, 74182 Obersulm-Eichelberg (DE)
(74) Vertreter: Jeck, Anton

(56) Entgegenhaltungen:
- WO-A-98/58994
- DE-U1- 29 502 430
- US-A- 4 356 273
- US-A- 4 944 416

## Beschreibung

Die Erfindung betrifft eine Baukonstruktion mit aus Holzwerkstoffen bestehenden Teilen nach dem Oberbegriff des Anspruchs 1.

Bei herkömmlichen Baukonstruktionen der eingangs genannten Art, wie sie z. B. in der DE 103 08 377 beschrieben sind, dient die Dämmschicht zur Erhöhung der Stabilität sowie der Wärme- und Geräuschdämmung des Bauteiles. Solche Baukonstruktionen können jedoch höheren Kräftebelastungen, wie sie bei Baukonstruktionen aus Holz üblich sind, nicht standhalten.

Durch die WO 98/58994 ist ein Verfahren zur Herstellung von Platten aus Schaumkunststoff bekannt, dem Zusatzstoffe beigemischt werden, um ein steinähnliches Bauelement zu schaffen. Dabei wird die Mischung nach dem Ausschäumen bei einer Temperatur von 20-80 °C einem Druck von 2-14 mPa ausgesetzt. Ein solches Bauelement hat den Nachteil, dass es aufgrund des hohen Pressdrucks schwer ist und zu Brüchen neigt.

Aus der DE 103 56 767 A1 ist ein Formkörper bekannt, der sich aus Bindemitteln und Füllstoffen zusammensetzt. Das Bindemittel auf Polyurethanbasis kann Polyisocyanat, Polyolen oder langkettige Fettsäuren umfassen, während als Füllstoffe beispielsweise Schaumstoffmehl, Holzmehl, zerkleinerte Kunststoffabfälle oder Mischungen daraus verwendet werden können. Die Bindemittel und die Füllstoffe werden bei einem Druck von 1-40 m Pa und bei Temperaturen von 60-180 °C für 1-30 min zur Reaktion gebracht. Diese Formkörper eignen sich zur Herstellung von Platten für die Beschichtung von Böden, Wänden oder Decken.

Aus der DE 295 02 430 U1 ist ein Fertighaus aus vorgefertigten, tragenden Wänden bekannt, die mehrschichtig mit mindestens einer inneren Kunststoffschaumschicht und zwei härteren Außenschichten aufgebaut sind. Die Innenschicht kann aus Polyurethanschaum bestehen, während die Außenschichten als Pressspanholzplatten ausgebildet sein können. Die Verbindungsart der Innenschicht und der Außenschichten wird nicht beschrieben.

Ferner ist aus der DE 89 04 124 U1 ein Verbundelement für Bauzwecke bekannt, das aus einer Innenplatte aus Hartschaumstoff, insbesondere Polystyrol, und zwei Außendeckschichten aus Holzwerkstoff, insbesondere Hartfaserplatten oder Spanplatten, besteht. Zur Verbindung der Hartschaumplatte mit den Hartfaser- bzw. Holzspanplatten dient ein bei 140-160° C aushärtender Haftschmelzkleber.

Schließlich ist aus der DE 103 35 957 A1 ein Formteil aus Melamin-Formaldehyd-Schaumstoff bekannt, das in einer Presse bei einer Temperatur von 160-240° C und einem Absolutdruck von 5-100 bar innerhalb von 15-120 s hergestellt wird. Diese Formteile können beispielsweise im Kraftfahrzeugbau oder für Rohrisolierungen verwendet werden.

Ausgehend von dem obigen Stand der Technik liegt der Erfindung die Aufgabe zugrunde, hier Abhilfe zu schaffen und die gattungsgemäße Baukonstruktion ohne unangemessenen konstruktiven Aufwand so weiter zu bilden, dass bei ihr unter Beibehaltung guter Wärme- und Geräuschdämmungen die Biegebeanspruchung erheblich erhöht wird.
Die gestellte Aufgabe wird erfindungsgemäß durch die Merkmale des Anspruchs 1 gelöst.

Man erkennt, dass die Erfindung jedenfalls dann verwirklicht ist, wenn es sich um eine Baukonstruktion, insbesondere Dachelemente, Wandelemente, Träger oder dergleichen handelt, bei denen ein stark verdichteter Wärmedämmstoff verwendet wird, der trotz hoher Verdichtung ein deutlich geringeres spezifisches Gesicht als Holz aufweist, so dass die bekannten vorteilhaften Eigenschaften des Dämmstoffes beibehalten werden.

Die Erfindung sieht vor, dass der Kunststoffschaumstoff bei einem Arbeitsdruck im Bereich von 1100 bis 1300 kPa hergestellt wird. Durch diese Maßnahmen wird ein Wärmedämmstoff mit optimalen physikalischen und chemischen Eigenschaften erreicht, der alle Anforderungen an eine Baukonstruktion erfüllt.

Zudem wird eine deutlich höhere Biegebeanspruchung erreicht, so dass die Baukonstruktion eine Biegebeanspruchung aufweist, die mit einer vollständig aus Holz bestehenden Baukonstruktion vergleichbar ist.

Weitere zweckmäßige und vorteilhafte Ausgestaltungen der Erfindung gehen aus den Unteransprüchen hervor.

Eine besonders zweckmäßige Ausgestaltung der Erfindung sieht vor, dass die Baukonstruktion ein quaderförmiger Körper mit relativ geringer Höhe ist. Hierbei können diese Maßnahmen auch so getroffen sein, dass die Höhe einige Zentimeter, vorzugsweise 5-25 cm beträgt, während die Breite und/oder die Länge des Körpers ein Mehrfaches der Höhe beträgt. Durch diese Maßnahmen können. Baukonstruktionen unterschiedlicher Maße und Formen hergestellt werden, vorzugsweise jedoch Dachelemente, Wandelemente, Träger, konstruktives Holz usw.

Ein Ausführungsbeispiel der Erfindung ist in der Zeichnung schematisch dargestellt und wird im Folgenden näher erläutert. Es zeigen:
- Fig. 1: die Außenteile eines Hauses und
- Fig. 2: einen Teil einer Platte in perspektivischer Ansicht

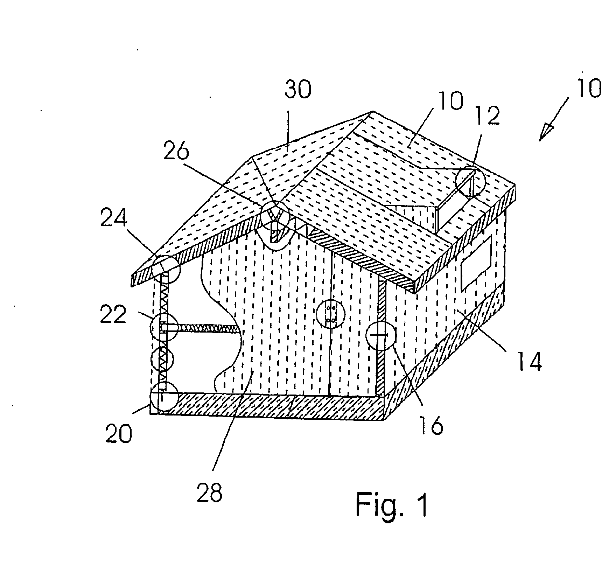

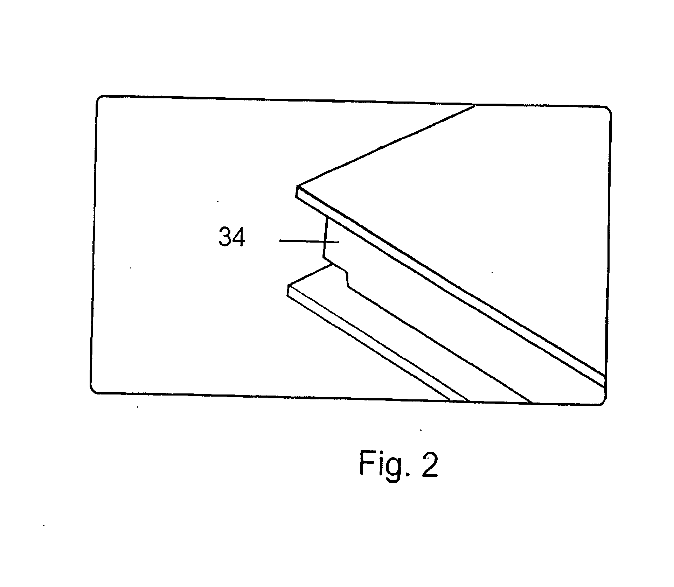

Die in den Fig. 1 und 2 dargestellte Baukonstruktion mit aus Holzwerkstoff bestehenden Teilen, wie Platten, Bretter oder Balken, die eine Kunststoff-schaumstoff-Dämmschicht zumindest teilweise umgeben, zeichnet sich dadurch aus, dass die Dämmschicht 34 (Fig. 2) aus stark verdichtetem Kunststoff besteht. Der Kunststoffschaumstoff wird bei einem Arbeitsdruck von mehr als 1000 kPa hergestellt, wobei vorzugsweise ein Arbeitsdruck im Bereich von 1100 bis 1300 kPa gewählt wird.

Die Baukonstruktionen sind im Wesentlichen quaderförmige Körper mit relativ geringer Höhe, so dass dadurch flächige Dachelemente 10, 30 sowie flächige Wandelemente 14, 28 hergestellt werden können. Diese Elemente bestehen regelmäßig aus zwei parallelen Platten mit Abstand von wenigen Zentimetern, zwischen denen die Dämmschicht angeordnet ist und den Baukonstruktionen die gewünschte Biegefestigkeit verleiht. Die Eigenschaften des vorgeschlagenen Dämmstoffes erlauben es, auf diese Weise auch Balken u. ä. Trageelemente zu bilden. Die Balken bestehen sodann aus einem aus Holz bestehenden Hohlkörper mit rechteckigem Querschnitt, dessen hohler Innenraum mit stark verdichtetem Kunststoffschaumstoff ausgefüllt ist.

Wie Fig. 1 zeigt, können auch die Eckverbindungen 16, Zwischendecken 22, Fußpfetten 24 und Firstpfetten 26 aus Baukonstruktionen hergestellt werden, wie sie in der Erfindung vorgeschlagen sind. Im Bereich des Fußpunktes 20 und der C-SIPS-Verbindungen oder die Dachgaube 12 können die Teile aus vorgeschlagenen Materialien hergestellt werden.

## Patentansprüche

1. Baukonstruktion mit aus Holzwerkstoff bestehenden Teilen, welche eine Kunststoffschaum-Dämmschicht (34) zumindest teilweise umgeben, wobei die die Kunststoffschaum-Dämmschicht zumindest teilweise umgebenden Teile tragende Teile der Baukonstruktion sind,
**dadurch gekennzeichnet,**
**dass** die Kunststoffschaum-Dämmschicht (34) aus bei einem Arbeitsdruck im Bereich von 1100-1300 kPa hergestelltem stark verdichtetem Kunststoffschaum besteht und die Holzwerkstoff-Teile einen aus Holz bestehenden Hohlkörper definieren, dessen Innenraum mit dem Kunststoffschaum ausgefüllt ist.

2. Baukonstruktion nach Anspruch 1,
**dadurch gekennzeichnet,**
**dass** sie einen quaderförmigen Körper mit relativ geringer Höhe umfasst, die einige Zentimeter, vorzugsweise 5 bis 25 cm, beträgt, während die Breite und/oder die Länge des Körpers ein Mehrfaches der Höhe beträgt.

3. Baukonstruktion nach Anspruch 1 oder 2,
**gekennzeichnet durch**
zwei parallele Platten an zwei gegenüberliegenden Seiten der Kunststoffschaum-Dämmschicht (34).

4. Baukonstruktion nach einem der vorhergehenden Ansprüche,
**dadurch gekennzeichnet,**
**dass** die Baukonstruktion als ein Dachelement oder ein Träger oder ein konstruktives Holz ausgebildet ist.

## Claims

1. A building construction having parts comprising wood material, which at least partly surround a plastic foam insulation layer (34), and the parts at least partly surrounding the plastic foam insulation layer are load-bearing parts of the building construction,
**characterized in that**
the plastic foam insulation layer (34) comprises extremely dense plastic foam produced at a work pressure in the range of 1100 to 1300 kPa, and the wood material parts define a hollow body, comprising wood, whose interior is filled with the plastic foam.

2. The building construction as defined by claim 1,
**characterized in that**
it includes a block-shaped body of relatively low height, which amounts to a few centimeters, preferably 5 to 25 cm, while the width and/or length of the body is a multiple of the height.

3. The building construction as defined by claim 1 or 2,
**characterized by**
two parallel plates on two opposed sides of the plastic foam insulation layer (34).

4. The building construction as defined by one of the foregoing claims,
**characterized in that**
the building construction is embodied as a roof element or a beam or a structural wood.

## Revendications

1. Structure de construction présentant des parties qui consistent en un matériau dérivé du bois et entourent, au moins partiellement, une couche isolante (34) en mousse de matière synthétique, sachant que les parties, entourant au moins partiellement ladite couche isolante en mousse de matière synthétique, sont des parties porteuses de ladite structure de construction,
**caractérisée par le fait**
**que** la couche isolante (34) en mousse de matière synthétique est constituée d'une mousse de matière synthétique fortement compactée, fabriquée sous une pression de travail située dans la plage de 1100-1300 kPa, et les parties en matériau dérivé du bois définissent un corps creux qui consiste en du bois, et dont l'espace interne est comblé par ladite mousse de matière synthétique.

2. Structure de construction selon la revendication 1,
**caractérisée par le fait**
**qu'**elle inclut un corps parallélépipédique de hauteur relativement faible mesurant quelques centimètres, de préférence de 5 à 25 cm, tandis que la largeur et/ou la longueur dudit corps représente(nt) un multiple de ladite hauteur.

3. Structure de construction selon la revendication 1 ou 2,
**caractérisée par**
deux panneaux parallèles, placés sur deux faces opposées de la couche isolante (34) en mousse de matière synthétique.

4. Structure de construction selon l'une des revendications précédentes,
**caractérisée par le fait**
**que** ladite structure de construction est réalisée sous la forme d'un élément de toiture ou d'un support, voire d'un bois d'ossature.
